(19)

Europäisches
Patentamt
European
Patent Office
Office européen
des brevets

(11) **EP 4 660 816 A1**

(12) **EUROPEAN PATENT APPLICATION**

(43) Date of publication:
**10.12.2025 Bulletin 2025/50**

(21) Application number: **25177983.1**

(22) Date of filing: **21.05.2025**

(51) International Patent Classification (IPC):
**G06F 12/02** *(2006.01)* **G06F 3/06** *(2006.01)*
**G06F 16/10** *(2019.01)*

(52) Cooperative Patent Classification (CPC):
**G06F 12/023; G06F 3/0608; G06F 3/064;**
**G06F 3/0661; G06F 3/067; G06F 3/0676;**
**G06F 3/068; G06F 3/0685; G06F 3/0689;**
**G06F 12/0284; G06F 16/10;** G06F 2212/1016;
G06F 2212/1044; G06F 2212/401

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **04.06.2024 KR 20240073247**

(71) Applicant: **Samsung Electronics Co., Ltd.**
**Suwon-si, Gyeonggi-do 16677 (KR)**

(72) Inventors:
• **Shin, Youngsam**
**16678 Suwon-si, Gyeonggi-do (KR)**
• **Oh, Deok Jae**
**16678 Suwon-si, Gyeonggi-do (KR)**
• **Ji, Hyungtak**
**16678 Suwon-si, Gyeonggi-do (KR)**

(74) Representative: **Grünecker Patent- und**
**Rechtsanwälte**
**PartG mbB**
**Leopoldstraße 4**
**80802 München (DE)**

(54) **MEMORY DEVICE USING COMPRESSED ZONES AND OPERATING METHOD THEREOF**

(57)  A memory device includes a memory array including compressed zones including a first compressed zone including slots of a first slot size and a second compressed zone including slots of a second slot size; and a controller configured to compress a first data element received from a processing block and store the compressed first data element in a first slot of the slots of the first compressed zone based on a data size of the compressed first data element.

100

110

120 Memory device

121

122

Processing block

Control module

Memory array

FIG. 1

EP 4 660 816 A1

**Description**

1. Technical Field

The following embodiments are directed to a memory device using compressed zones and a method of operating the memory device.

2. Discussion of Related Art

Memory compression is a technique that can increase performance of computing systems and reduce the cost of systems with high memory demands. Memory compression can be applied to various fields such as machine learning, graphical analytics, databases, games, and autonomous driving.

For example, LZ77 compression, Huffman coding, and Run-Length Encoding (RLE) are currently used to compress data stored in a main memory of computer. These techniques may perform compression effectively using patterns or repetitive structures of data. However, these techniques can incur additional computational costs for compression and decompression, require decompression that causes some performance degradation, and may incur additional overhead if the compressed data needed to be modified.

SUMMARY

The invention is claimed in the independent claims. Preferred embodiments are specified in the dependent claims.

In an embodiment, a memory device includes: a memory array including compressed zones including a first compressed zone including slots of a first slot size and a second compressed zone including slots of a second slot size; and a controller configured to compress a first data element received from a processing block, and store the compressed first data element in a first slot of the slots of the first compressed zone based on a data size of the compressed first data element.

In an embodiment, a method of operating a controller of a memory device includes: compressing a first data element received from a processing block; and based on a data size of the compressed first data element, storing the compressed first data element in a first slot of a first compressed zone among compressed zones of a memory array of the memory device. The compressed zones include the first compressed zone including slots of a first slot size and a second compressed zone including slots of a second slot size.

In an embodiment, a memory device includes: a controller and a memory array. The memory array includes a zone including a compressed subzone having first slots of a same size and an uncompressed subzone comprising second slots of a same size. The controller is configured to determine whether received data is compressible; when it is determined that the received data is compressible, the controller is configured to compress the received data into compressed data and store the compressed data in one of the first slots; and when it is determined that the received data is not compressible, the controller is configured to store the received data in one of the second slots.

BRIEF DESCRIPTION OF THE DRAWINGS

FIG 1 is a diagram illustrating an example configuration of an electronic device according an example embodiment.
FIG 2 is a diagram illustrating an example configuration of a memory device according to an example embodiment.
FIG 3 is a diagram illustrating an example process of storing compressed data elements in compressed zones based on compression results according to an example embodiment.
FIG 4 a diagram illustrating an example configuration of a compressed zone according to an example embodiment.
FIG 5 is a diagram illustrating an example process of operating a compressed subzone and an uncompressed subzone according to an example embodiment.
FIG 6 is a diagram illustrating an example process of processing an overflow using a compressed subzone and an uncompressed subzone according to an embodiment.
FIG 7 is a diagram illustrating an example process of processing a data element of a zero data type according to an example embodiment.
FIG 8 is a diagram illustrating an example process of repacking a cold data element according to an example embodiment.
FIG 9 is a diagram illustrating an example process of setting an unspecified compressed zone according to an example embodiment.

FIG 10 is a diagram illustrating example detailed operations of a processing block and a memory device according to an example embodiment.

FIG 11 is a diagram illustrating an example compression process with buffer caching according to an example embodiment.

FIG 12 is a diagram illustrating an example compression process without buffer caching according to an example embodiment.

FIG 13 is a flowchart illustrating an example method of operating a control module of a memory device using compressed zones according to an example embodiment.

FIG 14 is a flowchart illustrating an example process of storing a data element based on a predicted compressibility according to one or more example embodiments.

## DETAILED DESCRIPTION

The following description is provided to describe the example embodiments, but the scope of the example embodiments is not limited to the descriptions provided in the disclosure. Various changes and modifications can be made thereto by those of ordinary skill in the art.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It will be understood that when a component is referred to as being "connected to" another component, the component can be directly connected or coupled to the other component or intervening components may be present.

As used herein, the singular forms are intended to include the plural forms as well, unless the context clearly indicates otherwise.

As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof.

Hereinafter, the example embodiments will be described in detail with reference to the accompanying drawings. When describing the example embodiments with reference to the accompanying drawings, like reference numerals refer to like components, and a repeated description related thereto is omitted.

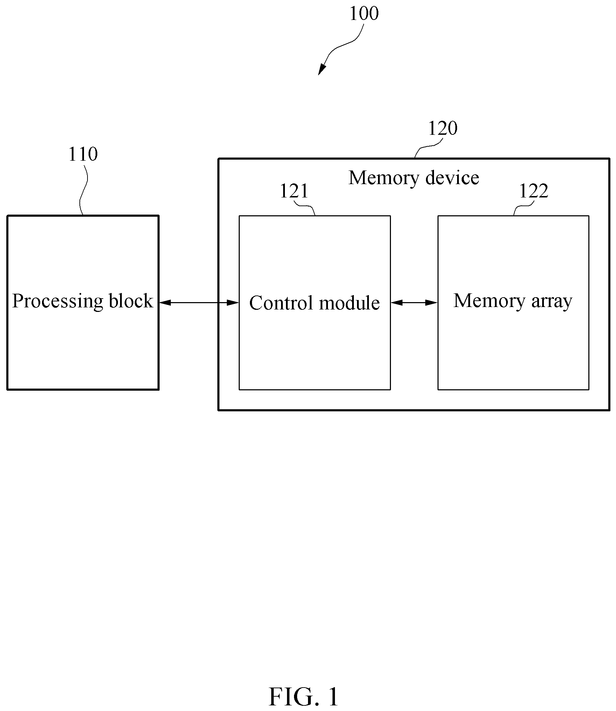

FIG 1 is a diagram illustrating an example configuration of an electronic device according to an example embodiment. Referring to FIG 1, an electronic device 100 may include a processing block 110 and a memory device 120. For example, the electronic device 100 may be implemented as at least a portion of a computing device, such as, but not limited to, a desktop, a server, a data center, or the like.

The processing block 110 may execute various applications based on an operating system (OS). The processing block 110 may correspond to a host. The processing block 110 may execute the OS and the applications using various devices in the processing block 110 and using the memory device 120. For example, the processing block 110 may include at least one processor and at least one memory device. The at least one processor of the processing block 110 may store data associated with the OS and the applications in the at least one memory device in the processing block 110 and/or in the memory device 120 outside the processing block 110.

The memory device 120 may be disposed outside the processing block 110 and may be referred to as an external memory or extended memory. For example, the memory device 120 may be, but is not limited to, a processing-near-memory (PNM) memory, a compute express link (CXL) memory, or the like. The memory device of the processing block 110 may be referred to as system memory, a host memory, or a host system memory. For example, the memory device of the processing block 110 may be, but is not limited to, a dynamic random-access memory (DRAM), a high bandwidth memory (HBM), or the like. Below, the memory device 120 will be referred to as an external memory, and the memory device of the processing block 110 will be referred to as a system memory. However, examples are not limited thereto.

In a case where the memory device 120 is a CXL memory device, the processing block 110 and the memory device 120 may be connected using a CXL technique. CXL refers to a connecting technique that supports cache consistency for processors, memory expanders, accelerators, or the like. For example, the CXL technique may support cache consistency between the processing block 110, the memory device 120, and other components. For example, in a case where a processor and an additional component are connected using CXL, the CXL technique may be used to maintain memory consistency between a memory space of the processor and a memory space of the additional component, increase the performance through resource sharing, reduce software stack complexity, and save overall system cost. A user may thus focus on their workloads instead of managing a memory of an accelerator. As the accelerator plays an increasing role in complementing processors to support new applications such as artificial intelligence (AI) and machine learning, CXL may be provided as an open standard interface for high-speed communication. CXL may provide a comprehensive interface environment to connect multiple components, such as, for example, processors, memory expanders, accelerators, and other peripherals.

Data to be stored in the memory device 120 may be transmitted from the processing block 110 to the memory device 120. The memory device 120 may include a control module 121 and a memory array 122. The control module 121 may control the memory array 122 and may store the data received from the processing block 110 in the memory array 122. The control module 121 may be a controller, a control circuit or a program executed by a processor of the memory device 120.

In an embodiment, the memory array 122 includes compressed zones, each including one or more slots. A memory compression technique may be applied to data that is to be stored in the compressed zones. According to the memory compression technique, a compressed memory space may be defined in a memory space, and compression and decompression may be performed to store and load data into the compressed memory space. The memory compression technique may increase memory capacity and memory bandwidth without increasing system cost, but may incur overhead due to compression and decompression and memory leakage due to fragmentation. According to an embodiment, the overhead of compression and decompression may be reduced by using compressibility prediction-based selective data compression, and fragmentation may be prevented by using compressed zones having slots of a fixed size.

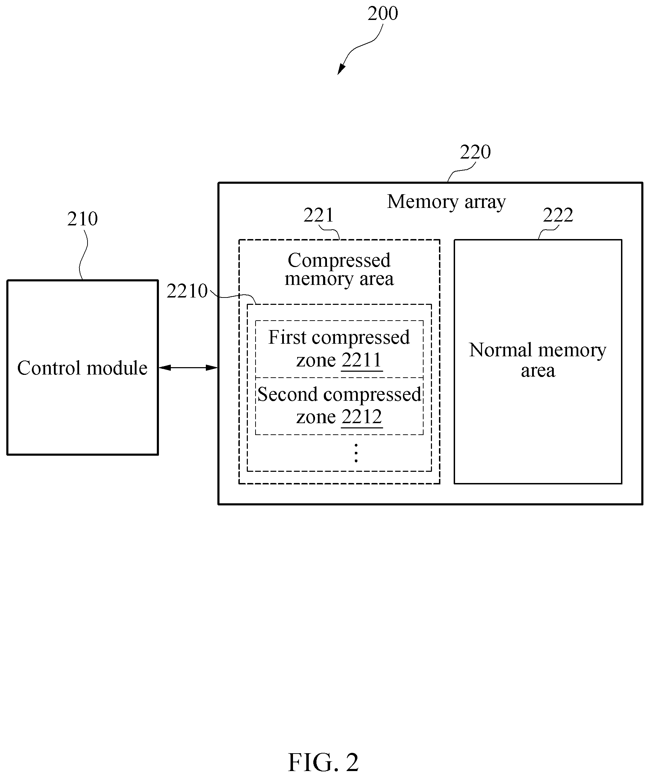

FIG 2 is a diagram illustrating an example configuration of a memory device according to an example embodiments. Referring to FIG 2, a memory device 200 may include a control module 210 (or a controller) and a memory array 220. In a case where the memory device 200 is a CXL memory device, the control module 210 may be a CXL memory controller. The memory array 220 includes a compressed memory area 221 and a normal memory area 222. The normal memory area 222 may include an uncompressed memory area. The compressed memory area 221 may include compressed zones 2210. For example, the compressed memory area 221 may be divided into the compressed zones 2210. The compressed zones 2210 may include, for example, a first compressed zone 2211 and a second compressed zone 2212.

In an embodiment, all slots in the same compressed zone have a same size, and this size is referred to as a slot size, and slots in different compressed zones may have different slot sizes. For example, the first compressed zone 2211 may include slots of a first slot size, and the second compressed zone 2212 may include slots of a second slot size. **In** this case, the first slot size and the second slot size may be different. Slots in different compressed zones may also have the same slot size. For example, the compressed zones 2210 may include another compressed zone (e.g., a third compressed zone), and slots in the other compressed zone (e.g., the third compressed zone) may have a unified slot size of one of the first slot size and the second slot size.

The compressed memory area 221, the compressed zones 2210, and the normal memory area 222 may be logically defined on the memory array 220. For example, each of the areas and zones may have a logical address that is mapped to a physical address. Data may be stored selectively in one of the compressed memory area 221 and the normal memory area 222. For example, one of the compressed memory area 221 and the normal memory area 222 may be selected by a user and/or an OS as a storage location for data.

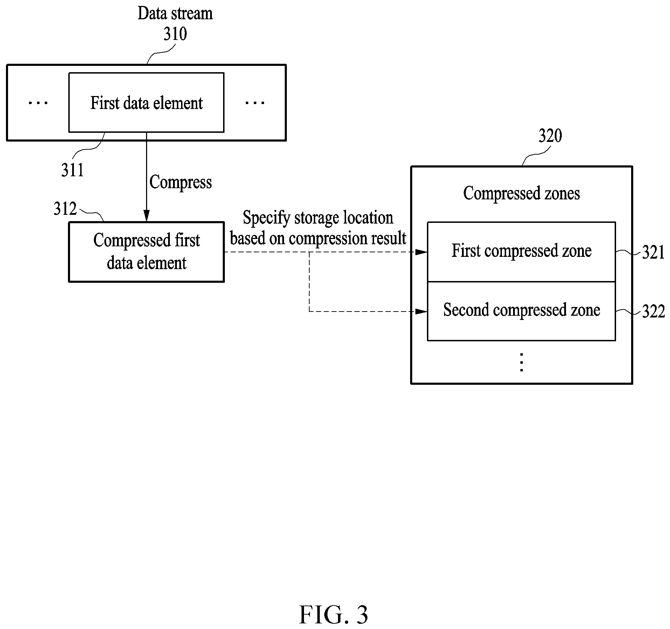

FIG 3 is a diagram illustrating an example process of storing compressed data elements in compressed zones based on compression results according to an example embodiment. Referring to FIG 3, a control module (e.g., 210) may compress a first data element 311 of data elements in a data stream 310 to generate a compressed first data element 312. The data stream 310 may be received from a processing block (e.g., 110). The data elements in the data stream 310 may be divided according to a data processing unit. For example, the data elements of the data stream 310 may each correspond to a page of a memory block of the memory array 220. Below, an example of data elements having a page unit will be described, but examples are not limited thereto. For example, the data processing unit may include, but is not limited to, a cache line, a page, a huge page, or a combination thereof.

For example, compressed zones 320 may include a first compressed zone 321 and a second compressed zone 322. The control module may specify a storage location in the compressed zones 320 for the compressed first data element 312 based on a compression result of the compressed first data element 312. The compressed first data element 312 may be stored in a slot of one of the compressed zones 320. For example, the compression result indicate a data size of the compressed first data element 312 and/or a compressibility of the compressed first data element 312. Below, specifying a storage location based on a data size will be described, but the specifying may be performed using compressibility instead of or in addition to the data size. For example, if the first data element 311 was compressed from a first size to the compressed first data element 312 of a smaller second size, the compressed first data element 312 could be stored in a slot of a zone that is less than or equal to that size. For example, if there are two different levels compressibility such as a first level indicating highly compressible and a second level of moderately compressible, and the first data element 311 is considered to have the second level, the compressed first data element 312 could be stored in a slot of a zone associated with this second level. While two levels are discussed in this example, embodiments are not limited thereto as there may be more than two levels. The compression result may also indicate whether the first data element 312 is compressible or likely to benefit sufficiently from compression to warrant compression.

The control module may specify the storage location for the compressed first data element 312 based on the data size of the compressed first data element 312. Slots in the same compressed zone among the compressed zones 320 may have the same slot size, and slots in different compressed zones may have different slot sizes. For example, the first compressed zone 321 may include slots of a first slot size, and the second compressed zone 322 may include slots of a second slot size. **In** a case where the first slot size is suitable for storing the compressed first data element 312, the control module may store the compressed first data element 312 in a slot (e.g., a first slot among the slots of the first compressed zone 321) of the first compressed zone 321.

In an embodiment, the first slot size is greater than the data size of the compressed first data element 312 and less than or equal to slot sizes of other compressed zones among the compressed zone 320. The other compressed zones may refer to compressed zones other than the first compressed zone 321 of the compressed zones 320. The first slot size may be the smallest of slot sizes of at least some compressed zones of the compressed zones 320 having a slot size greater than the data size of the compressed first data element 312. For example, the compressed zones 320 may include ones with slot sizes of 0.5 Kb, 1 Kb, 2 Kb, 3 Kb, or the like. For example, the first data element 311 may have a data size of 4 Kb, and the compressed first data element 312 may have a data size of 0.8 Kb. In this example, the compressibility is 80%. In a case where the first slot size of the first compressed zone 321 is 1 KB and the second slot size of the second compressed zone 322 is 2 KB, the compressed first data element 312 may be stored in a slot of the first compressed zone 321. For example, even though the compressed first data element 312 could fit within the second compressed zone 322, it may be placed in the first compressed zone 321 to ensure there is less unused space.

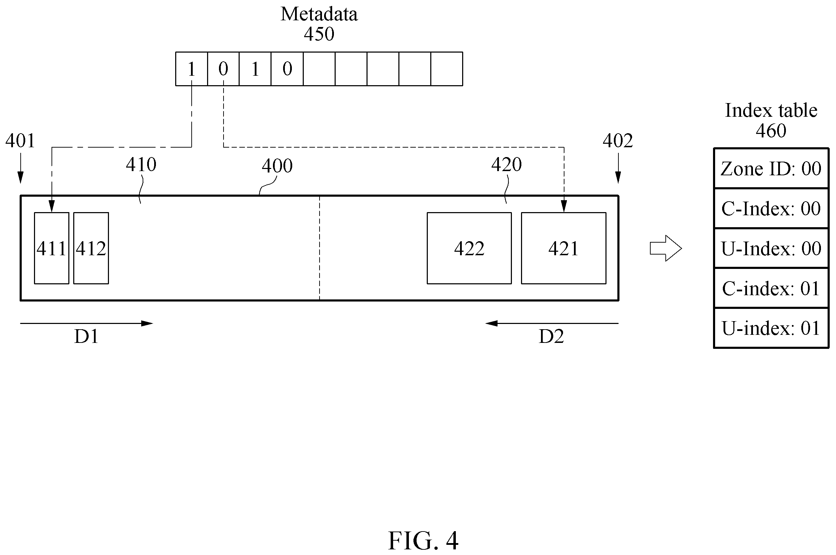

FIG 4 a diagram illustrating an example configuration of a compressed zone according to an example embodiment. Referring to FIG 4, a compressed zone 400 includes a compressed subzone 410 and an uncompressed subzone 420. The compressed subzone 410 and the uncompressed subzone 420 may be logically defined on the compressed zone 400. For example, a logical address of the compressed subzone 410 may be based on a beginning logical address of the compressed zone 400 and a logical address of the uncompressed subzone 420 may be based on an ending logical address of the compressed zone 400. The compressed zone 400 may be one of a plurality of compressed zones in a compressed memory area (e.g., 221) of a memory array (e.g., 220). The description of the compressed zone 400 may be applicable to each compressed zone of the compressed memory area (e.g., 221).

The compressed subzone 410 may include portions 411 and 412, and the uncompressed subzone 420 may include portions 421 and 422. The portions 411 and 412 of the compressed subzone 410 may be referred to as slots. That is, slots corresponding to the portions 411 and 412 may be formed in the compressed subzone 410. In an embodiment, the slots corresponding to the portions 411 and 412 have a fixed slot size. Data elements may be stored in the portions 411 and 412 of the compressed subzone 410 while in a compressed state or may be stored in the portions 421 and 422 of the uncompressed subzone 420 while in an uncompressed state.

The compressed subzone 410 may be formed from a memory address at one end 401 of the compressed zone 400, and the uncompressed subzone 420 may be formed from a memory address at the other end 402 of the compressed zone 400. For example, a location of the compressed subzone 410 may be determined from the memory address at end 401 and a location of the uncompressed subzone 420 may be determined from the memory address at end 402. Compressed data elements may be stored in the portions 411 and 412 of the compressed subzone 410 in a first direction D1 from the one end 401, and uncompressed data elements may be stored in the portions 421 and 422 of the uncompressed subzone 420 in a second direction D2 from the other end 402. The first direction D1 may be from the one end 401 to the other end 402, and the second direction D2 may be from the other end 402 to the one end 401. In the compressed zone 410, the one end 401 and the other end 402 may be located at opposite ends from each other. For example, the one end 401 may be a left end, a right end, a top, or a bottom. In a case where the one end 401 is a left end, the other end 402 may be a right end; in a case where the one end 401 is a right end, the other end 402 may be a left end; in a case where the one end 401 is a top, the other end 402 may be a bottom; and in a case where the one end 401 is a bottom, the other end 402 may be a top.

An electronic device may include a system memory inside the processing block (e.g., 110) and an external memory outside the processing block. The compressed zone 400 may be formed in a compressed memory area (e.g., 221) of the external memory. An OS may use the system memory and the external memory to execute various applications. A memory address of the external memory may be incorporated into an address space of the system memory. The memory address of the external memory may be set to occupy a certain range of a memory map of the processing block. For example, the memory map may be a plurality of logical or virtual memory addresses.

The processing block may include a memory controller, a basic input output system (BIOS), a unified extensible firmware interface (UEFI), or a combination thereof, and the memory map may be managed by the memory controller, BIOS, UEFI, or a combination thereof. Memory address mapping and memory address translation may be performed based on memory-mapped input output (MMIO), and system mapping may be performed based on MMIO for the external memory. A processor (e.g., a central processing unit (CPU)) of the processing block may access the external memory using a physical memory address, and this physical address may be derived using a certain range of the memory map for the memory address of the external memory. For example, the processor may receive the virtual memory address and convert the virtual memory address into the physical address.

The OS may use the virtual memory address. The virtual memory address may be translated into the physical memory address through a page table. A memory management unit (MMU) of the processing block may perform an address translation operation between the virtual memory address and the physical memory address. In a case where the physical memory address translated from the virtual memory address is a memory address of the system memory, a memory access to the system memory may be performed, and in a case where the physical memory address is a memory address of the external memory, a memory access to the external memory may be performed.

The page table may be managed by the OS. The OS may use the page table to manage the system memory and the external memory. Entries in the page table may include mapping information of memory addresses of the system memory and the external memory, with virtual memory addresses and physical memory addresses being mapped therein. The OS may dynamically adjust the entries in the page table for efficient management of the system memory and the external memory.

The memory address translation may be performed on the portions 411 and 412 (e.g., slots) of the compressed subzone 410 of the compressed zone 400 and the portions 421 and 422 of the uncompressed subzone 420, using metadata 450, an index table 460, or a combination thereof. The memory address translation may refer to a translation between a virtual memory address and a physical memory address. For example, the memory address translation may be performed based on the metadata 450 and/or a location and content of each entry in the index table 460. The metadata 450 and the index table 460 may be stored in the memory array 220. For example, the metadata 450 and the index table 460 may be stored in the normal memory area 222, but are not limited thereto.

The metadata 450 may indicate storage locations of data elements based on an identifier of the compressed subzone 410 and an identifier of the uncompressed subzone 420. For example, as shown in FIG 4, the identifier of the compressed subzone 410 is "1" and the identifier of the uncompressed subzone 420 is "0," but examples are not limited thereto. For example, in a case where a first data element is stored in the compressed subzone 410, an identifier of the first data element in the metadata 450 may be indicated as "1," and in a case where a second data element is stored in the uncompressed subzone 420, an identifier of the second data element in the metadata 450 may be indicated as "'0."

The index table 460 may indicate storage locations of data elements based on indices of compressed zones, indices of slots corresponding to portions (e.g., the portions 411 and 412) of a compressed subzone (e.g., the compressed subzone 410) of each compressed zone (e.g., the compressed zone 400), and indices of portions (e.g., the portions 421 and 422) of an uncompressed subzone (e.g., the uncompressed subzone 420). For example, the index table 460 includes a "Zone ID," a "C-Index," and a "U-Index," as shown in FIG 4. The "Zone ID" may indicate indices of compressed zones. In the example of FIG 4, "Zone ID: 00" indicates that an index of the compressed zone 400 is "00." "C-Index" may indicate indices of portions (e.g., slots) of a compressed subzone of each compressed zone. "U-Index" may indicate indices of portions of an uncompressed subzone of each compressed zone. In the example of FIG 4, "00" in "C-Index: 00" indicates an index of the portion 411, and "00" in "U-Index: 00" indicates an index of the portion 421. Additionally, "01" in "C-Index: 01" indicates an index of the portion 412, and "01" in "U-Index: 01" indicates an index of the portion 422. In an embodiment, each compressed zone is associated with one metadata and/or one index table.

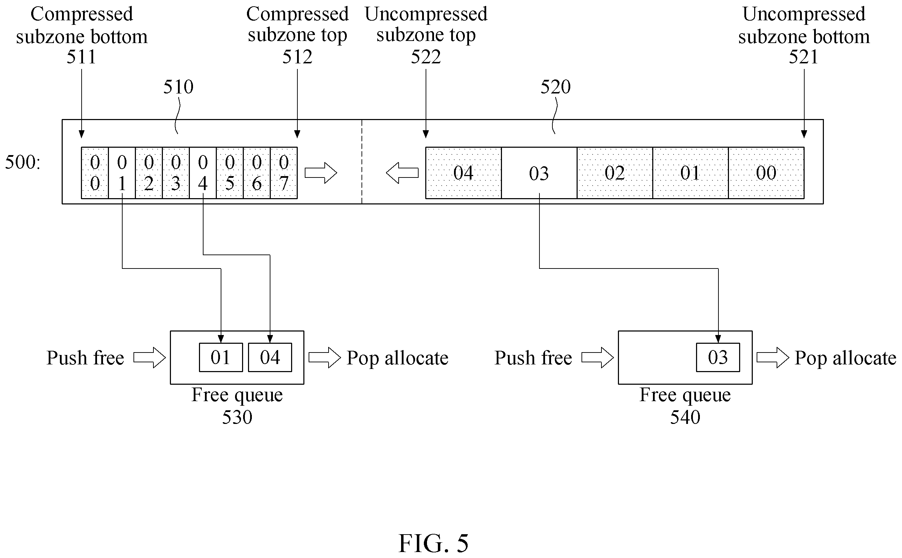

FIG 5 is a diagram illustrating an example process of operating a compressed subzone and an uncompressed subzone according to an example embodiment. Referring to FIG 5, compressed data elements may be stored in a compressed subzone 510 of a compressed zone 500. The compressed data elements may be stored in a direction from a compressed subzone bottom 511 toward a compressed subzone top 512. As the compressed data elements are stored in the compressed subzone 510, the compressed subzone top 512 may be moved. The compressed subzone bottom 511 may correspond to the one end 401 in FIG 4.

For example, in an empty state in which the compressed subzone 510 is empty, the compressed subzone bottom 511 and the compressed subzone top 512 may indicate the same index "00." When data is stored at index "00" in the compressed subzone 510, the compressed subzone top 512 may be increased to index "01." The compressed data elements may be stored sequentially at indices from "00" to "07" of the compressed subzone 510.

After the compressed data elements are stored in the indices from "00" to "07" of the compressed subzone 510, the compressed data element at index "01" and the compressed data element at index "04" may be moved to another storage location (e.g., the uncompressed subzone 520) due to overflow or the like. For example, a control module may decompress the compressed data element stored in a slot corresponding to index "01" of the compressed subzone 510 based on a request from a processing block to generate a decompressed data element, and transmit the decompressed data element to the processing block. In this case, when the decompressed data element is changed by the processing block to a new data element, the control module may compress the new data element. In this case, in response to a data size of the compressed new data element being greater than a slot size of the compressed subzone 510, the control module may store the compressed new data element in the uncompressed subzone 520 of the compressed zone 500.

In this case, to reuse a memory space corresponding to the indices "01" and "04," the indices "01" and "04" may be stored in a free queue 530 through a push free operation. The indices "01" and "04 in the free queue 530 may be used to store other compressed data elements through a pop allocate operation.

The push free operation of the free queue 530 upon the generation of a free slot may be performed based on an algorithm shown in Table 1.

[Table 1]

```
If (free-index == left_top-1) then left_top --
          Push free-index
```

Based on Table 1, whether "free-index" and "left_top-1" are the same may be determined. In this case, "free-index" may represent indices "01" and "04" of the compressed subzone 510, and "left_top-1" may represent a previous location of the compressed subzone top 512. Here, "left_top --" may indicate an operation of decreasing "left_top" by 1. In response to "free-index" and "left_top-1" being the same, a space of the free queue 530 may be saved as "left_top" may be decreased by 1 without "free-index" being added to the free queue 530. In response to "free-index" and "left_top-1" not being the same, "free-index" may be added to the free queue 530 through a push operation.

The pop allocate operation of the free queue 530 for allocating a new slot may be performed based on an algorithm shown in Table 2.

[Table 2]

```
If (Free-Queue != Empty)
          then Pop-Allocate
     Else_If (left_top != right_top)
          then allocate left_top and left_top ++
     Else  return NULL and Set New Next Zone
```

Based on Table 2, whether a "Free-Queue" is empty may be determined. "Free-Queue" may represent the free queue 530. In response to "Free-Queue" not being empty, an index of the free queue 530 may be used to allocate a new slot through a "Pop-Allocate" operation. In response to "Free-Queue" being empty, whether "left_top" and "right_top" are the same may be determined. In this case, "left_top" may represent the compressed subzone top 512, and "right_top" may refer to an uncompressed subzone top 522. In response to "left_top" and "right_top" being different, an index of "left_top" may be allocated to a new slot, and "left_top" may be increased by 1. In this case, "left_top ++" may indicate an operation of increasing "left_top" by 1. In a case where the allocate operation using the compressed zone 500 is not available because the compressed zone 500 is full, "NULL" may be returned, and a new compressed zone may be allocated. "New_Next_Zone may represent the new compressed zone.

Uncompressed data elements may be stored in the uncompressed subzone 520 of the compressed zone 500. The uncompressed data elements may be stored in a direction from an uncompressed subzone bottom 521 toward the uncompressed subzone top 522. As the uncompressed data elements are stored in the uncompressed subzone 520, the uncompressed subzone top 522 may be moved. The uncompressed subzone bottom 521 may correspond to the other end 402 in FIG 4.

For example, when the uncompressed subzone 520 is empty, the uncompressed subzone bottom 521 and the uncompressed subzone top 522 may indicate the same index "00." The uncompressed data elements may be stored sequentially at indices "00" to "04" in the uncompressed subzone 520.

After the uncompressed data elements are stored at indices "00" to "04" of the uncompressed subzone 520, the uncompressed data element at index "03" may be moved to another storage location (e.g., the compressed subzone 510) due to improved compressibility or the like. For example, the control module may decompress a compressed new data element stored in a portion of index "03" of the uncompressed subzone 520 based on a request from the processing block, and transmit the decompressed new data element to the processing block. The compressed new data element stored in the portion of index "03" may be one that is obtained by compressing the new data element described above in relation to the overflow described as an example. When the new data element is changed by the processing block to another new data element, the control module may compress the other new data element. In this case, when a data size of the compressed other new data element is less than a slot size of the compressed subzone 510, the control module may store the compressed other new data element in one of the slots of the compressed subzone 510.

A push free operation of a free queue 540 upon the generation of a free slot may be performed based on an algorithm shown in Table 3.

[Table 3]

```
If (free-index == right_top-1) then right_top --
        Push free-index
```

Based on Table 3, whether "free-index" and "right_top-1" are the same may be determined. In this case, "free-index" may represent index "03" of the uncompressed subzone 520, and "'right_top-1" may represent a previous location of the uncompressed subzone top 522. Here, "right_top --" may indicate an operation of decreasing "right _top" by 1. In response to "free-index" and "right_top-1" being the same, a space in the free queue 540 may be saved by decreasing "right_top" by 1 without adding "free-index" to the free queue 540. In response to "free-index" and "right_top-1" not being the same, "free-index" may be added to the free queue 540 through a push operation.

A pop allocate operation of the free queue 540 for allocating a new portion may be performed based on an algorithm shown in Table 4.

[Table 4]

```
      If (Free-Queue != Empty)
           then Pop-Allocate
      Else_If (right_top != left_top)
           then allocate right_top and right_top ++
      Else return NULL and Set New_Next_Zone
```

Based on Table 4, whether "Free-Queue" is empty may be determined. "Free-Queue" may represent the free queue 540. In response to "Free-Queue" not being empty, an index of **the free** queue 540 may be used to allocate a new portion through a "Pop-Allocate" operation. In response to "Free-Queue" being empty, whether "left_top" and "right_top" are the same may be determined. In response to "left_top" and "right_top" being different, an index of "right_top" may be allocated to a new slot, and "right_top" may be increased by 1. In this case, "right_top ++" may indicate an operation of increasing "right_top" by 1. Additionally, in a case where, as the compressed zone 500 is full, the allocate operation using the compressed zone 500 is not available, "NULL" may be returned and a new compressed zone may be allocated. "New_Next_Zone" may represent the new compressed zone.

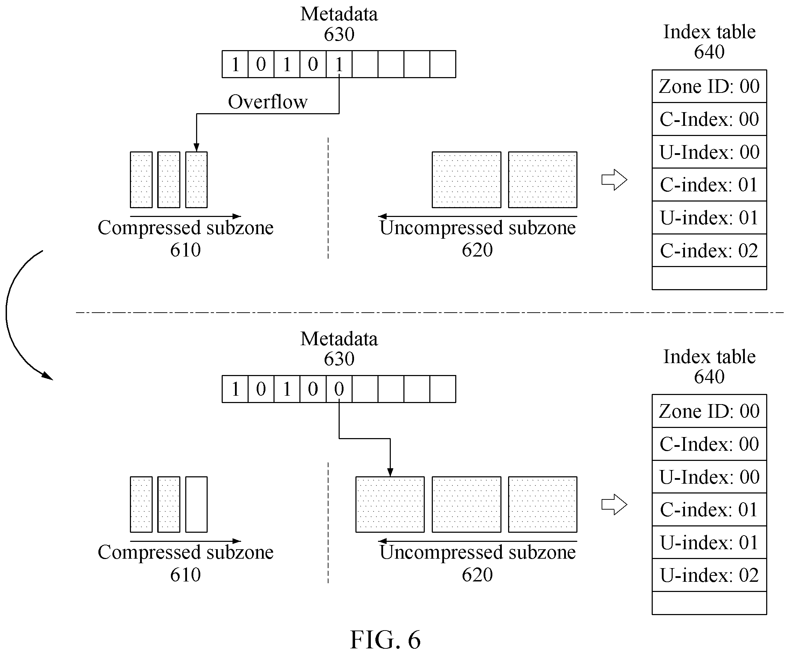

FIG 6 is a diagram illustrating an example process of processing an overflow using a compressed subzone and an uncompressed subzone according to an example embodiment. Referring to FIG 6, metadata 630 and an index table 640 may represent storage states of a compressed subzone 610 and an uncompressed subzone 620. FIG 6 illustrates a process of processing an overflow of a fifth entry in the metadata 630 and the index table 640.

Based on a request from a processing block, a control module (e.g., 210) may decompress a compressed data element stored in a "C-index: 02" slot of the compressed subzone 610 to generate a decompressed data element and transmit the decompressed data element to the processing block. When the decompressed data element is changed by the processing block to a new data element, the control module may compress the new data element. In response to a data size of the compressed new data element being greater than a slot size of the compressed subzone 610, the control module may store the compressed new data element in the uncompressed subzone 620.

As the compressed data element of "C-index: 02" of the compressed subzone 610 moves to "U-index: 02" of the uncompressed subzone 620, "C-index: 02" of the compressed subzone 610 may be added to a free queue through a push free operation. The fifth entry in the metadata 630 may be updated from "1" to "0," and the fifth entry in the index table 640 may be updated from "C-index: 02" to "U-index: 02."

A compressed zone including the compressed subzone 610 and the uncompressed subzone 620 may be associated with the metadata 630 and/or the index table 640. Entries of the metadata 630 may be sequentially read to determine how data is distributed across the compressed subzone 610 and the uncompressed subzone 620. For example, before the metadata 630 is updated in FIG 6, its first entry indicates first data is compressed, its second entry indicates second data is not compressed, its third entry indicates third data is compressed, its fourth entry indicates fourth data is not compressed and its fifth entry indicates fifth data is compressed. The index entries in the index table 640 may indicate whether the data is located in the compressed subzone 610 or the uncompressed subzone 620, and the location of the data within the corresponding zone. For example, before the index table 640 is updated in FIG 6, its first index entry indicates the first data is located in the first slot of the compressed subzone 610, its second index entry indicates the second data is located in the first slot of the uncompressed subzone 620, its third index entry indicates the second data is located in the second slot of the compressed subzone 610, its fourth index entry indicates the fourth data is located in the second slot of the uncompressed subzone 620 and its fifth entry indicates the fifth data is located in the third slot of the compressed subzone 610. Thus, when the fifth data is decompressed and moved to the uncompressed subzone 620, the fifth entry in the metadata 630 is changed from a 0 to a 1 and the fifth entry in the index table 640 is changed from a C-index to a U-index to indicate it is not compressed or is stored in an uncompressed subzone. In this example, the U-index value of 02 is unchanged merely because it was placed again in a third slot, but of the uncompressed subzone 620. However, had the data been placed into the fourth slot, the value of the U-index would have been updated to "03" since the index values begin from 0.

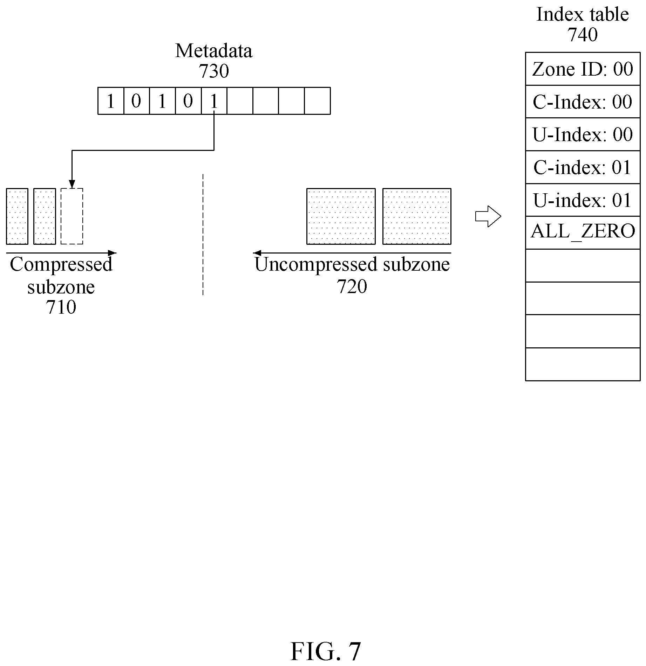

FIG 7 is a diagram illustrating an example process of processing a data element of a zero data type according to an example embodiment. Data elements may have various data types depending on a data pattern of each data element. The data types may include, for example, a compressible data type, an incompressible data type, a zero data type, a random data type, or a combination thereof. A data element including only zeros (0) may correspond to the zero data type.

A data element with randomly distributed data may correspond to the random data type. The data elements may be processed differently depending on their data types. For example, data elements of the incompressible data type and the random data type may be treated as an incompressible target.

Referring to FIG 7, in an embodiment, for a data element of the zero data type, only information for the corresponding data element is recorded in metadata 730 and/or an index table 740, without the data element being compressed or stored in a compressed subzone 710 or an uncompressed subzone 720. For example, it may be recorded as "1" or "0" in the metadata 730. FIG 7 illustrates an example where a data element of the zero data type is recorded as "1" in the metadata 730. An identification code corresponding to the zero data type, "ALL_ZERO," may be recorded in the index table 740. For example, while FIG 7 shows an arrow pointing from the fifth element of the metadata 730 to the compressed subzone 710, the data element associated with this fifth element need not be stored in the compressed subzone 710. In an alternate embodiment, the zero data type additionally includes a count of the number of zeros present in the corresponding data element.

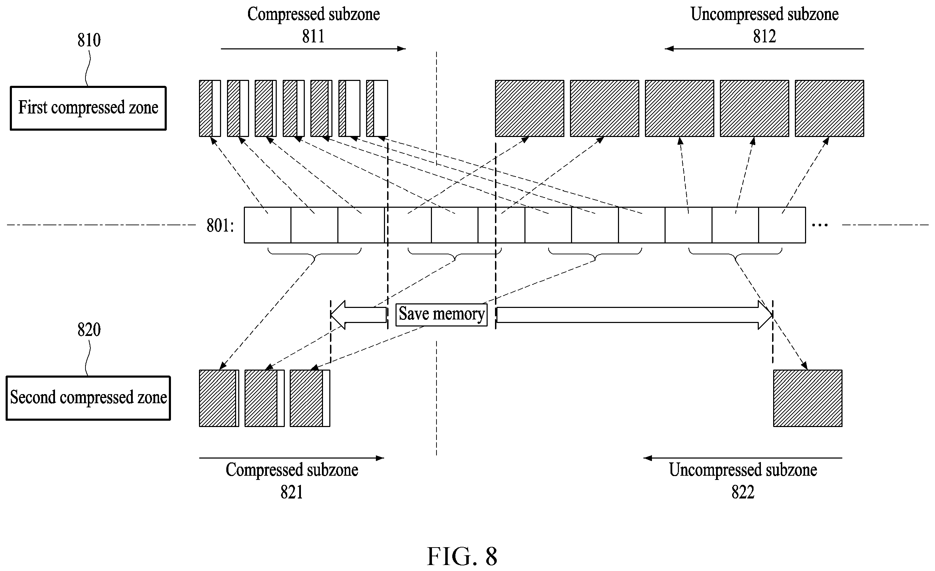

FIG 8 is a diagram illustrating an example process of repacking or repackaging a cold data element according to an example embodiment. A compressed data element may be stored in a slot of a compressed zone. In this case, the slot may include surplus space other than a space in which the compressed data element is stored. For example, a data element may have a data size of 4 Kb, a compressed data element may have a data size of 0.8 Kb, and the compressed data element may be stored in a slot of a compressed zone having a slot size of 1 KB. In this case, there may be a surplus space of 0.2 KB. Repackaging may reduce this surplus space and save memory capacity. Repackaging may be performed on cold data elements not used for over a predetermined amount of time.

Referring to FIG 8, data elements of a data stream 801 may be stored in a compressed subzone 811 and an uncompressed subzone 812 of a first compressed zone 810. Depending on compressibility, there may be surplus space of various amounts in slots of the compressed subzone 811. A second slot size of a compressed subzone 821 of a second compressed zone 820 may be greater than a first slot size of the compressed subzone 811 of the first compressed zone 810.

A control module may repack compressed data elements stored in the slots of the compressed subzone 811 of the first compressed zone 810 and store them in slots of the compressed subzone 821 of the second compressed zone 820. In this case, along with the compressed data elements stored in the slots of the compressed subzone 811 of the first compressed zone 810, uncompressed data elements stored in slots of the uncompressed subzone 812 of the first compressed zone 810 may be repacked. The slots of the compressed subzone 821 of the second compressed zone 820 may include less surplus spaces, compared to the surplus spaces of the slots of the compressed subzone 811 of the first compressed zone 810, and memory capacity may be saved. For example, if a slot of a compressed subzone of the first compressed zone 321 has first compressed data and surplus space, and a slot of a compressed subzone of the second compressed zone 322 has second compressed data that can fit in the surplus space, this second compressed data can be moved to the surplus space of the second compressed zone 322 during the repack. In another example, if a first slot of a compressed subzone of the first compressed zone 321 has first compressed data and surplus space, and a second slot of the compressed subzone of the first compressed zone 321 has second compressed data that can fit in the surplus space, this second compressed data can be moved to the surplus space of the first compressed zone 321 during the repack.

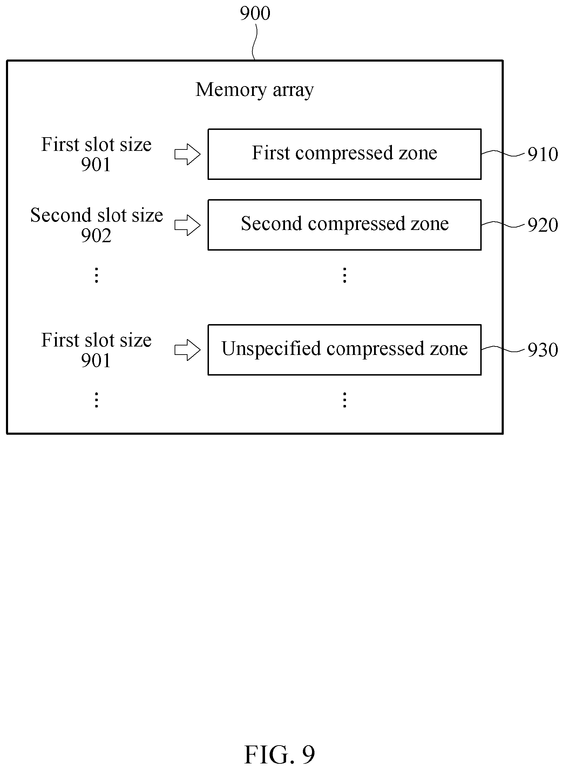

FIG 9 is a diagram illustrating an example process of setting an unspecified compressed zone according to an example embodiments. Referring to FIG 9, a memory array 900 may include compressed zones including, for example, a first compressed zone 910 and a second compressed zone 920, and one of slot sizes including, for example, a first slot size 901 and a second slot size 902, may be allocated to each compressed zone. A compressed subzone of each compressed zone may include slots of an allocated slot size. The types of slot sizes may be predetermined. For example, the slot sizes may include, but are not limited to, 0.5 Kb, 1 Kb, 2 Kb, and 3 Kb.

A varying size of compressed zones may cause unnecessary data movement or require a complex addressing scheme. The memory array 900 may include an unspecified compressed zone 930 with an unspecified slot size, and the slot size of the unspecified compressed zone 930 may be set depending on a situation. For example, in a case where it is determined that the memory array 900 lacks slots having the first slot size 901, the first slot size 901 may be allocated dynamically to the unspecified compressed zone 930. Additional compressed data elements may be stored in slots of the first slot size 901 in the unspecified compressed zone 930. For example, the unspecified compressed zone 930 may be dynamically created when it is determined that the memory array 900 lacks slots having the first slot size 901.

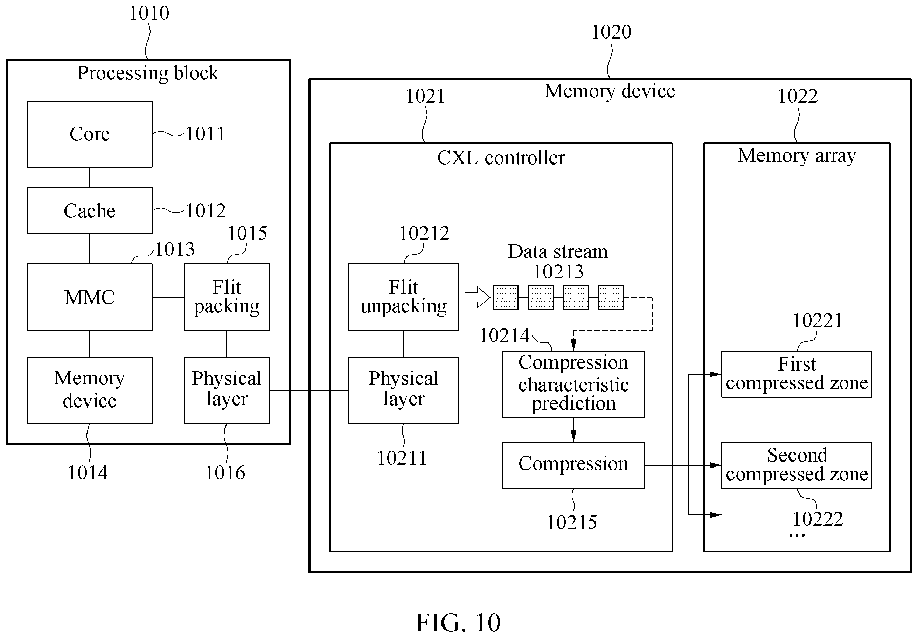

FIG 10 is a diagram illustrating example detailed operations of a processing block and a memory device according to an example embodiment. Referring to FIG 10, a core 1011 of a processing block 1010 may store data in a memory device 1014 inside the processing block 1010 and in a memory device 1020 outside the processing block 1010. The memory device 1014 may be a main memory, such as, a DRAM or HBM. The core 1011 may read data from the memory device 1014 and the memory device 1020 and process the read data using a cache 1012.

A memory management controller (MMC) 1013 (e.g., a controller circuit) may control data movement. In a case where there is a need to store data in the memory device 1014 or load data from the memory device 1014, the MMC 1013 may transfer the data from the core 1011 and the cache 1012 to the memory device 1014, or from the memory device 1014 to the core 1011 and the cache 1012. In a case where there is a need to store data in the memory device 1020 and load data from the memory device 1020, the MMC 1013 may transfer the data from the core 1011 and the cache 1012 to the memory device 1020, or from the memory device 1020 to the core 1011 and the cache 1012.

For data transfer from the core 1011 and the cache 1012 to the memory device 1020, the data may be packetized through a flit packing unit 1015, and the packetized data may be transferred to the memory device 1020 through physical layers 1016 and 10211. The flit packing unit 1015 may break down a large data packet into a smaller units referred to as flits or flow control units. Conversely, for data transfer from the memory device 1020 to the core 1011 and the cache 1012, the data may be packetized by a control module 1021 (e.g., a CXL controller), and the packetized data may be transferred to the processing block 1010 through the physical layers 1016 and 10211. The packetized data may be converted to a data stream 10213 by a CXL flit unpacking unit 10212. The data stream 10213 may include data elements. The memory device 1020 may be a CXL memory device. **In** this case, the flit packing unit 1015 may be a CXL flit packing unit, the physical layers 1016 and 10211 may be CXL physical layers, and the flit unpacking unit 10212 may be a CXL flit unpacking unit.

A compression characteristic prediction unit 10214 of the control module 1021 may perform a compression characteristic prediction on the data elements of the data stream 10213 and a compression unit 10215 of the control module 1021 may perform a compression on the data elements of the data stream 10213 based on a result of the compression characteristic prediction. The result may include compression characteristics such as compressibility and/or data type. Separate hardware logic (e.g., compressor/decompressor) may be provided in the compression unit 10215. This hardware logic may be provided inside the control module 1021 or may be provided between the control module 1021 and the memory array 1022. **In** a case where the hardware logic is provided outside the control module 1021, the control module 1021 may instruct the compression unit 10215 to perform the compression using the hardware logic.

The compression characteristics may be predicted based on data entropy of the data elements. The prediction may be performed using Shannon entropy but embodiments are not limited thereto. Shannon entropy may indicate the type and quantity of components of data. Data with high entropy may have low compressibility. Shannon entropy may indicate an expected value of an amount of information of all events. Shannon entropy may be used to represent an amount of uncertainty about a probability distribution of all events. Shannon entropy may be determined using Equation 1 below.

$$H(X) = -\sum_i P(x_i)\log_b P(x_i)$$

[Equation 1]

In Equation 1, H(X) denotes a Shannon byte entropy of a set X, and $P(x_i)$ denotes a probability mass function of a data symbol $x_i$ and b denotes a base for a logarithmic (or log) calculation. For example, b may be 2, but is not limited thereto. H(x) may be higher for an uniform distribution and lower for a non-uniform distribution. A predicted compressibility may be determined using Equation 2 below.

$$C(X) = 2^{H(X)^2} - 1$$

[Equation 2]

In Equation 2, C(X) denotes a predicted compressibility of sample data X, and H(X) denotes a Shannon byte entropy of X. Before compressing a data element of the data stream 10213, a compressibility of the data element may be predicted. In this case, in response to the predicted compressibility of the data element being less than a utility threshold, the data element may be stored in an uncompressed state in the memory array 1022. A compressed zone for storing a data element having a predicted compressibility less than the utility threshold may be selected in advance from the compressed zones including the first compressed zone 10221 and the second compressed zone 10222. For example, in a case where the second compressed zone 10222 is selected from the compressed zones, the data element may be stored in an uncompressed subzone of the second compressed zone 10222.

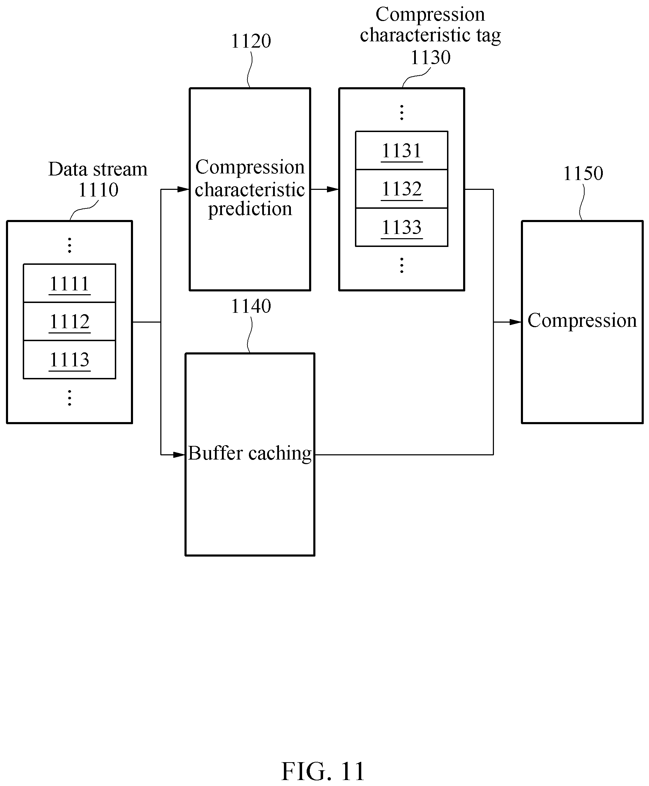

FIG 11 is a diagram illustrating an example compression process with buffer caching according to an example embodiment. Referring to FIG 11, a compression characteristic tag 1130 may be generated through a compression characteristic prediction 1120 for data elements 1111 to 1113 of a data stream 1110. The compression characteristic tag 1130 may include tag values 1131 to 1133 associated with the data elements 1111 to 1113. For example, the tag values 1131 to 1133 may indicate compressibility values and/or data types of the data elements 1111 to 1113. The data types may include, for example, a compressible data type, an incompressible data type, a zero data type, a random data type, or a combination thereof.

The data elements 1111 to 1113 of the data stream 1110 may be stored in a buffer cache through buffer caching 1140. The compression characteristic prediction 1120 and the buffer caching 1140 may be performed in parallel. Based on the compression characteristic tag 1130, compression 1150 may be performed on the data elements 1111 to 1113 in the buffer cache. Data elements of the incompressible data type and the random data type may be stored in a memory array without the compression 1150. For example, these data elements may be stored in an uncompressed subzone of a predetermined compressed zone. For example, data elements of the compressible data type may be stored in a memory array when the compression 1150 is performed.

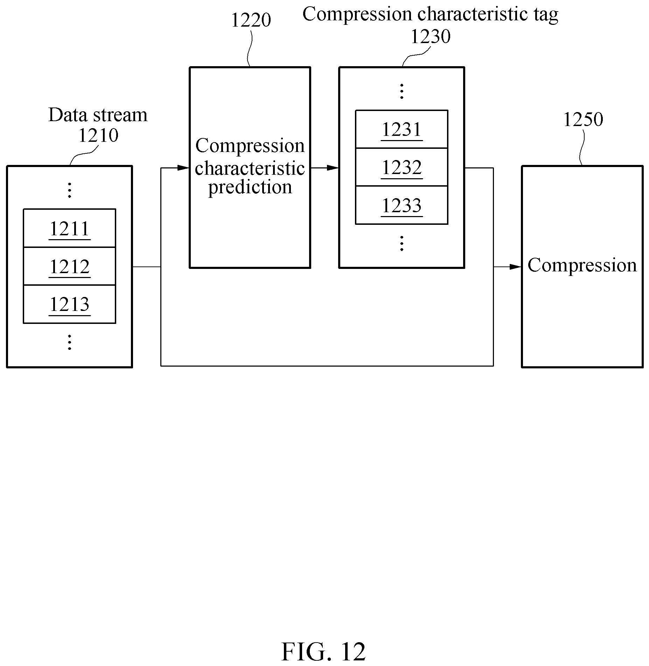

FIG 12 is a diagram illustrating an example compression process without buffer caching according to an example embodiment. Referring to FIG 12, a compression characteristic tag 1230 may be generated through compression characteristic prediction 1220 for data elements 1211 through 1213 of a data stream 1210. The compression characteristic tag 1230 may include tag values 1231 to 1233 associated with the data elements 1211 to 1213. Unlike the example of FIG 11, buffer caching is not performed in the example of FIG 12. In this case, the data elements 1211 to 1213 of the data stream 1210 may be compressed (e.g., through compression 1250) directly without buffer caching. While the compression 1250 is being performed on the data elements 1211 to 1213, the compression characteristic prediction 1220 may be performed on the data elements 1211 to 1213. The compression 1250 of the data elements 1211 to 1213 may be stopped as needed. For example, in a case where data elements of an incompressible data type and a random data type are found among the data elements 1211 to 1213, the compression 1250 for those data elements may be stopped.

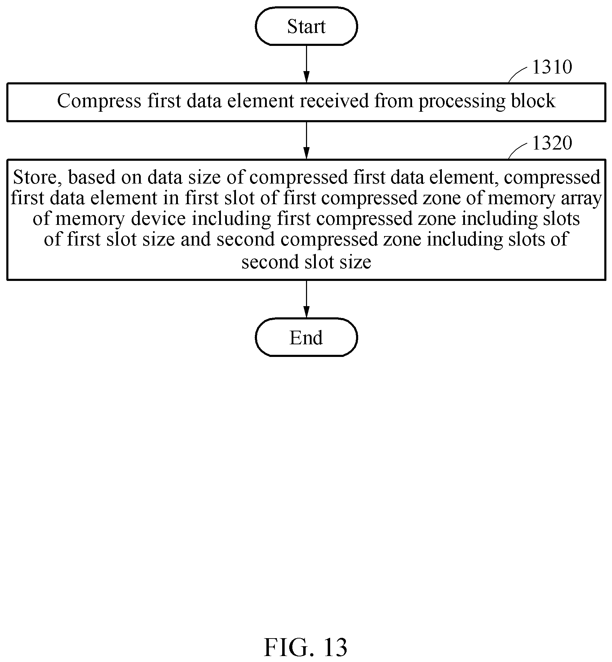

FIG 13 is a flowchart illustrating an example method of operating a control module of a memory device using compressed zones according to an example embodiment. Referring to FIG 13, the control module compresses a first data element received from a processing block in step 1310, and stores the compressed first data element in a first slot of a first compressed zone of a memory array of the memory device in step 1320 based on a data size of the compressed first data element. In this case, the memory array may include compressed zones including the first compressed zone including slots of a first slot size and a second compressed zone including slots of a second slot size, and the first slot may be one of the slots of the first compressed zone.

The first slot size may be greater than the data size of the first compressed data element and may be less than or equal to slot sizes of other compressed zones among the compressed zones.

The first compressed zone may include a first compressed subzone and a first uncompressed subzone, and the slots of the first compressed zone may be formed in the first compressed subzone.

The first compressed subzone may be formed from a memory address at one end (e.g., beginning) of the first compressed zone, and the first uncompressed subzone may be formed from a memory address at the other end (e.g., ending) of the first compressed zone. For example, a location of the first compressed zone may be based on a memory address at the one end and a location of the first uncompressed subzone may be based on a memory address at the other end.

The control module may decompress the compressed first data element stored in the first slot of the first compressed subzone based on a request from the processing block to generate a decompressed first data element, and transmit the decompressed first data element to the processing block. In this case, when the decompressed first data element is changed by the processing block to a new first data element, the control module may compress the new first data element, and in response to a data size of the compressed new first data element being greater than the first slot size, may store the compressed new first data element in the first uncompressed subzone of the first compressed zone.

The control module may decompress the compressed new first data element stored in the first uncompressed subzone based on a request from the processing block to generate a decompressed new first data element, and transmit the decompressed new first data element to the processing block. In this case, when the new first data element is changed by the processing block to another new first data element, the control module may compress the other new first data element, and in response to a data size of the compressed other new first data element being less than the first slot size, may store the compressed other new first data element in one of the slots of the first compressed subzone.

A memory address translation between a virtual memory address and a physical memory address may be performed using metadata (e.g., 450/630/730), an index table (e.g., 460/640/740), or a combination thereof. The metadata may indicate a storage location of the first data element based on an identifier of the first compressed subzone and an identifier of the first uncompressed subzone, and the index table may indicate the storage location of the first data element based on indices of the compressed zones, indices of the slots of the first compressed subzone, and indices of portions of the first uncompressed subzone.

In an embodiment where the first data element corresponds to a zero data type including only zeros (0), the control module may record, in the index table, the first data element as an identification code corresponding to the zero data type without compressing or storing the first data element.

In a case where it is determined that the memory array lacks slots of the first slot size, the control module may allocate the first slot size to an unspecified compressed zone of the memory array for which a slot size is unspecified.

Before compressing a second data element received from the processing block, the control module may predict a compressibility of the second data element, and in response to the predicted compressibility being less than a utility threshold, may store the second data element in an uncompressed state in a second uncompressed subzone of the second compressed zone.

The first slot may include a surplus space other than a space in which the compressed first data element is stored.

The second slot size may be greater than the first slot size, and the control module may repack compressed data elements stored in the slots of the first compressed zone and store them in slots of the second compressed zone.

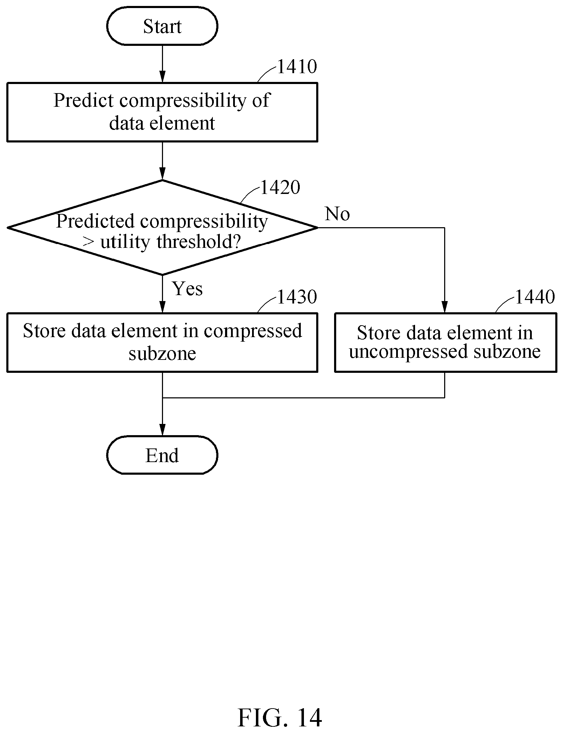

FIG 14 is a flowchart illustrating an example process of storing a data element based on a predicted compressibility according to an example embodiment. Referring to FIG 14, a control module predicts a compressibility of a data element in step 1410. For example, the control module may predict the compressibility based on entropy of the data element. The control module compares the predicted compressibility to a utility threshold in step 1420. The utility threshold may be predetermined.

In response to the predicted compressibility being greater than the utility threshold, the control module stores the data element in a compressed subzone in step 1430. For example, in response to the predicted compressibility being greater than the utility threshold, a data type of the data element may be determined to be a compressible data type, and step 1430 may be performed based on the compressibility and/or the data type. In response to the predicted compressibility being less than the utility threshold, the control module stores the data element in an uncompressed subzone in step 1440. For example, in response to the predicted compressibility being less than the utility threshold, the data type of the data element may be determined to be an incompressible data type, and step 1440 may be performed based on the compressibility and/or the data type.

The examples described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an OS and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is not limited by the detailed description, but is defined by the scope of the enclosed claims.

**Claims**

1. A memory device, comprising:

a memory array comprising compressed zones comprising a first compressed zone comprising slots of a first slot size and a second compressed zone comprising slots of a second slot size; and

a controller configured to compress a first data element received from a processing block, and store the compressed first data element in a first slot of the slots of the first compressed zone based on a data size of the compressed first data element.

2. The memory device of claim 1, wherein the first slot size is greater than the data size of the compressed first data element, and is less than or equal to slot sizes of other compressed zones of the compressed zones.

3. The memory device of claim 1 or 2, wherein the first compressed zone comprises:

a first compressed subzone and a first uncompressed subzone,
wherein the slots of the first compressed zone are located in the first compressed subzone.

4. The memory device of claim 3, wherein the first compressed subzone is formed from a memory address at one end of the first compressed zone, and
the first uncompressed subzone is formed from a memory address at the other end of the first compressed zone.

5. The memory device of claim 3, wherein the controller is configured to:

decompress the compressed first data element stored in the first slot of the first compressed subzone based on a request from the processing block;
transmit the decompressed first data element to the processing block;
in response to the decompressed first data element being changed by the processing block to a new first data element, compress the new first data element; and
in response to a data size of the compressed new first data element being greater than the first slot size, store the compressed new first data element in the first uncompressed subzone of the first compressed zone.

6. The memory device of claim 5, wherein the controller is configured to:

decompress the compressed new first data element stored in the first uncompressed subzone based on a request from the processing block;
transmit the decompressed new first data element to the processing block;
in response to the new first data element being changed by the processing block to another new first data element, compress the another new first data element; and
in response to a data size of the compressed another new first data element being less than the first slot size, store the compressed another new first data element in one of the slots of the first compressed subzone.

7. The memory device of claim 3, wherein a memory address translation between a virtual memory address and a physical memory address is performed using at least one of metadata and an index table,

wherein the metadata indicates a storage location of the first data element based on an identifier of the first compressed subzone and an identifier of the first uncompressed subzone, and
the index table indicates the storage location of the first data element based on indices of the compressed zones, indices of the slots of the first compressed subzone, and indices of portions of the first uncompressed subzone.

8. The memory device of claim 7, wherein the controller is configured to:
in response to the first data element being of a zero data type comprising only zeros, record the first data element in the index table as an identification code corresponding to the zero data type, without compressing or storing the first data element.

9. The memory device of one of claims 1 to 8, wherein the controller is configured to:
in response to the memory array being determined to lack slots of the first slot size, allocate the first slot size to an unspecified compressed zone of the memory array with an unspecified slot size.

10. The memory device of one of claims 1 to 9, wherein the controller is configured to:

before compressing a second data element received from the processing block, predict a compressibility of the second data element; and
in response to the predicted compressibility being less than a utility threshold, store the second data element uncompressed, in a second uncompressed subzone of the second compressed zone.

11. The memory device of one of claims 1 to 10, wherein the first slot comprises:
a surplus space other than a space in which the compressed first data element is stored.

12. The memory device of one of claims 1 to **11,** wherein the second slot size is greater than the first slot size, wherein the controller is configured to:
repack compressed data elements stored in the slots of the first compressed zone and store them in slots of the second compressed zone.

13. A method of operating a controller of a memory device having a memory array comprising a zone including a compressed subzone having first slots of a same size and an uncompressed subzone comprising second slots of a same size, wherein the method comprises:

determining whether received data is compressible;
when it is determined that the received data is compressible, compressing the received data into compressed data and storing the compressed data in one of the first slots; and
when it is determined that the received data is not compressible, storing the received data in one of the second slots.

14. The method of claim 13 further comprising maintaining metadata indicating whether the received data is stored in the compressed subzone or the uncompressed subzone.

15. The method of claim 13 further comprising maintaining an index table indicating which of the first slots the compressed data is located when the received data is compressed and which of the second slots the received data is located when the received data is not compressed.

100

120

110

Memory device

121

122

Processing block

Control module

Memory array

FIG. 1

200

220

Memory array

221

222

210

Compressed
memory area

2210

Control module

First compressed
zone 2211

Second compressed
zone 2212

Normal memory
area

FIG. 2

Data stream
310

... | First data element | ...

311

Compress

312

Compressed first
data element

Specify storage location
based on compression result

320

Compressed zones

First compressed zone ~321

Second compressed zone ~322

⋮

FIG. 3

FIG. 4

FIG. 5

## Metadata
630

| 1 | 0 | 1 | 0 | 1 |   |   |   |   |

Overflow

Compressed subzone
610

Uncompressed subzone
620

### Index table
640

| Zone ID: 00 |
| C-Index: 00 |
| U-Index: 00 |
| C-index: 01 |
| U-index: 01 |
| C-index: 02 |
|  |

## Metadata
630

| 1 | 0 | 1 | 0 | 0 |   |   |   |   |

Compressed subzone
610

Uncompressed subzone
620

### Index table
640

| Zone ID: 00 |
| C-Index: 00 |
| U-Index: 00 |
| C-index: 01 |
| U-index: 01 |
| U-index: 02 |
|  |

FIG. 6

EP 4 660 816 A1

Index table
740

| |
|---|
| Zone ID: 00 |
| C-Index: 00 |
| U-Index: 00 |
| C-index: 01 |
| U-index: 01 |
| ALL_ZERO |
| |
| |
| |
| |

Metadata
730

| 1 | 0 | 1 | 0 | 1 | | | | |
|---|---|---|---|---|---|---|---|---|

Compressed
subzone
710

Uncompressed subzone
720

FIG. 7

FIG. 8

EP 4 660 816 A1

900

**Memory array**

First slot size
901 ⇨ First compressed zone ⟿ 910

Second slot size
902 ⇨ Second compressed zone ⟿ 920

⋮ ⋮

First slot size
901 ⇨ Unspecified compressed zone ⟿ 930

⋮ ⋮

FIG. 9

EP 4 660 816 A1

FIG. 10

FIG. 11

FIG. 12

Start

1310

Compress first data element received from processing block

1320

Store, based on data size of compressed first data element, compressed first data element in first slot of first compressed zone of memory array of memory device including first compressed zone including slots of first slot size and second compressed zone including slots of second slot size

End

FIG. 13

```
                      ┌─────────────┐
                      │    Start    │
                      └──────┬──────┘
                             │            ⟋1410
                             ▼
              ┌──────────────────────────────┐
              │    Predict compressibility of │
              │         data element          │
              └──────────────┬───────────────┘
                             │            ⟋1420
                             ▼
                        ◇─────────◇
              ◇─────────────────────────────◇         No
              ◇   Predicted compressibility  ◇ ──────────────────┐
              ◇      > utility threshold?     ◇                   │
                ◇─────────────────────────◇                      │
                        ◇─────────◇                               │
                             │ Yes                                │
                             │         ⟋1430                      ▼         ⟋1440
                             ▼                                ┌─────────────────────┐
              ┌──────────────────────────────┐               │  Store data element in│
              │ Store data element in compressed│             │  uncompressed subzone │
              │            subzone            │               └──────────┬──────────┘
              └──────────────┬───────────────┘                           │
                             │◄──────────────────────────────────────────┘
                             ▼
                      ┌─────────────┐
                      │     End     │
                      └─────────────┘
```

# FIG. 14

Europäisches
Patentamt
European
Patent Office
Office européen
des brevets

# EUROPEAN SEARCH REPORT

**Application Number**

EP 25 17 7983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/054858 A1 (CHANDRASEKARAN SASHIKANTH [US] ET AL) 18 March 2004 (2004-03-18) | 1-6,12, 13 | INV. G06F12/02 G06F3/06 G06F16/10 |
| A | * paragraphs [0018], [0029] - paragraphs [0045] - [0046]; claims 1, 27; figures 1-7 * | 7-11,14, 15 | |
| A | US 2015/149739 A1 (SEO EUI SEONG [KR] ET AL) 28 May 2015 (2015-05-28) * paragraphs [0021], [0089] - [0105]; figure 3 * | 1-15 | |
| A | US 2019/332302 A1 (WATKINS GLENN [US]) 31 October 2019 (2019-10-31) * paragraphs [0015] - [0017], [0029] - [0032], [0038] - [0044] - paragraph [0050]; claims 1-20; figures 4, 6, 9 * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 21 October 2025 | Jardon, Stéphan |

EPO FORM 1503 03.82 (P04C01)

## EP 4 660 816 A1

## ANNEX TO THE EUROPEAN SEARCH REPORT
## ON EUROPEAN PATENT APPLICATION NO.

EP 25 17 7983

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | Publication date | Patent family member(s) | Publication date |
|---|---|---|---|
| US 2004054858 A1 | 18-03-2004 | US 2004054858 A1<br>US 2006212672 A1 | 18-03-2004<br>21-09-2006 |
| US 2015149739 A1 | 28-05-2015 | KR 101468336 B1<br>US 2015149739 A1 | 04-12-2014<br>28-05-2015 |
| US 2019332302 A1 | 31-10-2019 | NONE | |

For more details about this annex : see Official Journal of the European Patent Office, No. 12/82

30